(19) Europäisches Patentamt
European Patent Office
Office européen des brevets

(11) **EP 0 963 084 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(51) Int Cl.:
*H04L 25/03* (2006.01)  *H04L 27/22* (2006.01)
*H04L 27/233* (2006.01)

(21) Anmeldenummer: **99201611.3**

(22) Anmeldetag: **21.05.1999**

(54) **Empfänger für ein digitales Übertragungssystem**

Receiver for a digital transmission system

Récepteur pour système de transmission numérique

(84) Benannte Vertragsstaaten:
**DE FR GB**

(30) Priorität: **30.05.1998 DE 19824408**

(43) Veröffentlichungstag der Anmeldung:
**08.12.1999 Patentblatt 1999/49**

(73) Patentinhaber: **NXP B.V.**
**5656 AG Eindhoven (NL)**

(72) Erfinder:
- **Petersen, Jürgen A.**
  **Röntgenstrasse 24,**
  **22335 Hamburg (DE)**
- **Schober, Robert B.**
  **Röntgenstrasse 24,**
  **22335 Hamburg (DE)**
- **Gerstacker, Wolfgang B.**
  **Röntgenstrasse 24,**
  **22335 Hamburg (DE)**
- **Huber, Johannes B. Prof. Dr.-Ing.**
  **Röntgenstrasse 24,**
  **22335 Hamburg (DE)**

(74) Vertreter: **Long, Giorgio et al**
**Jacobacci & Partners S.p.A.**
**Via Senato 8**
**20121 Milano (IT)**

(56) Entgegenhaltungen:
- **ADACHI F: "MLSE differential phase detection for M-ary DPSK" IEE PROCEEDINGS: COMMUNICATIONS, INSTITUTION OF ELECTRICAL ENGINEERS, GB, Bd. 141, Nr. 6, 1. Dezember 1994 (1994-12-01), Seiten 407-12, XP006001685 ISSN: 1350-2425**
- **KIASALEH K ET AL: "MULTIPLE-SYMBOL DIFFERENTIAL DETECTION OF DQPSK AND DPSK MOBILE COMMUNICATION SYSTEMS IMPAIRED BY OSCILLATOR PHASE NOISE" IEEE GLOBAL TELECOMMUNICATIONS CONFERENCE. PHOENIX, ARIZONA, NOV. 3 - 8, 1997, GLOBAL TELECOMMUNICATIONS CONFERENCE (GLOBECOM), NEW YORK, IEEE, US, Bd. 3, 3. November 1997 (1997-11-03), Seiten 1215-1219, XP000737723 ISBN: 0-7803-4199-6**
- **FREEBERSYSER J A ET AL: "NON-REDUNDANT ERROR CORRECTION OF UNCODED M-DPSK USING A MODIFIED VITERBI ALGORITHM AND A SLIDING BLOCK NON-COHERENT MULTI-SYMBOL DETECTOR" SERVING HUMANITY THROUGH COMMUNICATIONS. SUPERCOMM/ICC. NEW ORLEANS, MAY 1 - 5, 1994, INTERNATIONAL CONFERENCE ON COMMUNICATIONS (ICC), NEW YORK, IEEE, US, Bd. 2, 1. Mai 1994 (1994-05-01), Seiten 950-955, XP000438646**
- **COLAVOLPE G ET AL: "NON-COHERENT SEQUENCE DETECTION OF M-ARY PSK" 1997 IEEE INTERNATIONAL CONFERENCE ON COMMUNICATIONS. MONTREAL, JUNE 8 - 12, 1997, IEEE INTERNATIONAL CONFERENCE ON COMMUNICATIONS (ICC), NEW YORK, NY: IEEE, US, Bd. 1, 8. Juni 1997 (1997-06-08), Seiten 21-25, XP000740196 ISBN: 0-7803-3926-6**
- **ADACHI F: "Reduced state transition Viterbi differential detection of M-ary DPSK signals" ELECTRONICS LETTERS, IEE STEVENAGE, GB, Bd. 32, Nr. 12, 6. Juni 1996 (1996-06-06), Seiten 1064-1066, XP006005218 ISSN: 0013-5194**

## Beschreibung

Die Erfindung betrifft einen Empfänger für ein digitales Übertragungssystem mit einem inkohärenten Übertragungsverfahren, der einen Entzerrer zur Bildung von Schätzwerte â[k] für eine Sequenz von über einen verzerrenden Übertragungskanal gesendeten Symbolen a[k] aus empfangenen Symbolen r[k] mittels einer die Übertragungseigenschaften beschreibenden Impulsantwort h [k] enthält.

Des weiteren betrifft die Erfindung noch einen Entzerrer für ein digitales Übertragungssystem mit einem inkohärenten Übertragungsverfahren sowie ein Mobilfunkgerät für ein digitales Übertragungssystem mit einem inkohärenten Übertragungsverfahren.

Solche Empfänger werden in digitalen Übertragungssystemen, beispielsweise dem digitalen Mobilfunk nach verschiedenen internationalen Standards verwendet, die aus wenigstens einem Sender, einem Übertragungskanal und einem Empfänger bestehen. Eine Datenquelle im Sender (beispielsweise ein Mikrofon mit einem A/D-Wandler in einem Mobilfunkgerät) erzeugt eine Folge von binären Symbolen $d[i] \in \{0;1\}$, die anschließend mit einem MDPSK(M-ary Differential Phase-Shift Keying)-Modulationsverfahren moduliert werden. Bei einer QPSK-Modulation (Quarternary Phase-Shift Keying, mit M=4) werden beispielsweise zwei aufeinanderfolgende Bits (00,01,10,11) in einem Mapper auf ein QPSK-Symbol a[k] abgebildet. Diese Symbole werden in einem Vorkodierer differentiell kodiert, so daß Symbole b[k] =a[k]·b[k-1] entstehen. Dadurch sind die Symbole nicht durch die absolute Phasenlage der Trägerfrequenz, sondern durch die Differenz der Phasenlage zum vorhergehenden Symbol bestimmt, was in einem Empfänger mit einem inkohärenten Empfangsverfahren ausgenutzt werden kann. Die Bestimmung einer absoluten Phasenlage führt bei der Demodulation aufgrund von Phasenmehrdeutigkeiten zu Problemen. Bei einer quaternären DPSK-Modulation ergeben sich relative Phasenunterschiede zwischen aufeinanderfolgenden Symbolen b[k] von 0˚, 90˚, 180˚ und -90˚ (bzw. 45˚, 135˚, -135˚ und -45˚ bei $\pi$/4-QDPSK) in Abhängigkeit von den Symbolen 00, 01, 10 und 11. Bei Verwendung einer differentiellen Vorkodierung der Symbole (QDPSK) spricht man auch von einem inkohärenten Übertragungsverfahren.

Die Folge von Symbolen b[k] wird über einen verzerrenden und mit Rauschen behafteten, evtl. zeitvarianten Übertragungskanal übertragen. In einer Empfangereingangsstufe wird das empfangene Signal r(t) in einem Symboltakt T abgetastet, wobei der Abtastzeitpunkt $kT+t_0$ von einer Synchronisationseinrichtung bestimmt wird. Dabei erhält man die diskrete Folge $r'[k]=r(kT+t_0)$. Eine anschließende Normierung mit der mittleren Nutzleistung der Empfangssymbole r'[k] führt zu den Symbolen r[k], die die mittlere Nutzleistung 1 haben. Die Symbole r[k] können beschrieben werden mit einem Nutzsymbol y[k], zu dem jeweils ein Störanteil n[k] addiert wird. Diese Rauschfolge n[k] kann als weiß und gaußverteilt angenommen werden.

Ein Empfänger schätzt mittels eines Entzerrers aus den Abtastwerten des Empfangssignals die Folge von Symbolen â[k-kmax], wobei diese Folge bis auf die Verzögerung kmax möglichst exakt mit der gesendeten Folge a[k] übereinstimmen soll. Aus den Symbolen ä[k-kmax] lassen sich dann durch Umkehrung des Mapping Schätzwerte für die Datenfolge d[i] ermitteln. Aus Gründen der Übersichtlichkeit wird im folgenden auf die Beschreibung der Sendeimpulsformung, Hochfrequenzmodulation und Sendeverstärkung sowie empfangsseitig auf die Hochfrequenzdemodulation und Empfangsfilterung verzichtet und lediglich das Basisbandmodell dargestellt. Die Übertragungseigenschaften des gesamten Übertragungskanals zwischen den sendeseitigen Symbolen b[k] und den empfangenen Symbolen r[k] werden bei einem zeitinvarianten Kanal in einer Gesamtimpulsantwort h(t), bzw. h[k] im Symboltaktmodell, zusammengefaßt. Bei einem zeitvarianten Kanal, d.h., wenn die Eigenschaften zeitabhängig sind, werden die Übertragungseigenschaften des Kanals mit der Kanalimpulsantwort h($\tau$,t) beschrieben. Im folgenden soll diese zeitliche Abhängigkeit zur Vereinfachung der Darstellung nicht berücksichtigt werden. In der Kanalimpulsantwort h(t) sind als Übertragungseigenschaften insbesondere auch die durch Mehrwegeausbreitung des Signals entstehenden Impulsinterferenzen (Intersymbolinterferences, ISI) des linear verzerrenden Übertragungskanals enthalten. Die Mischung des Basisbandsignals mit einem hochfrequenten Trägersignal hat bei nicht synchronisierten lokalen Oszillatoren (LO) einen Phasen- und Frequenzversatz zur Folge, der zusätzliche Intersymbolinterferenzen beim Empfang erzeugt.

Bei einem inkohärenten Empfänger wird die absolute Phasenlage eines empfangenen Symbols nicht innerhalb des Symbolintervalls bestimmt. Es wird nur die relative Phasendifferenz von aufeinanderfolgenden Symbolen bestimmt. Dies wird üblicherweise durch Differenzierung der Abtastfolge des empfangenen Signals mittels einer Multiplikation mit der um ein Symbolintervall verschobenen Abtastfolge der konjugiert komplexen Symbole erreicht. Die absolute Phasenlage der Trägerfrequenz wird damit aus der Nutzsignalfolge eliminiert. Auch das bei Mobilfunksystemen auftretende Rayleigh-Fading hat einen Frequenzoffset des Empfangssignals zur Folge, weshalb ein inkohärentes Empfangsverfahren vorteilhaft ist.

Empfänger mit inkohärenten Empfangsverfahren weisen bei Übertragungskanälen, bei denen ein im Intervall k empfangenes Symbol auch von L-1 vorhergehenden Symbolen beeinflußt ist, hohe Bitfehlerraten bei der Detektion der empfangenen Symbole auf. L bezeichnet die Anzahl der, z.B. durch Mehrwegeausbreitung, überlagerten Symbole im Intervall k, was mit einer Gedächtnistiefe L-1 des Übertragungskanals (mit einer diskreten Kanalimpulsantwort von h=[h(0), h(1), ..., h(L-1)]) beschrieben werden kann und Intersymbolinterferenzen (ISI) zur Folge hat. Durch die Überlagerung entsteht eine Sequenz von Nutzsymbolen y[k], die durch die Summe $y[k] = \sum_{l=0}^{L-1} h[l] \cdot b[k-l]$ beschrieben wird.

In John G. Proakis, "Digital Communications", 3rd Ed., McGraw-Hill International Editions, 1995 ist ein Empfangsverfahren für differentielle PSK (DPSK) bei impulsinterferenzfreien Kanälen beschrieben. Ab Seite 274 wird der Empfang von differentiell kodierten, phasenmodulierten Signalen dargestellt. Wie die angegebene Verarbeitung des empfangenen Signals r(t) ergibt, muß die Phasenlage des Trägersignals nicht geschätzt werden. Bei der Multiplikation des Abtastwertes r[k] eines empfangenen Signals r(t) mit dem konjugiert komplexen Wert des vorhergehenden Wertes r*[k-1] verschwindet die Phasenlage des Trägersignals aus der Bestimmungsgleichung, so daß zur Detektion lediglich die Differenz des Phasenwinkels des Signals zum Zeitpunkt k zum Phasenwinkel des vorhergehenden Signals (k-1) notwendig ist. Daher wird dieses MDPSK-Verfahren auch als inkohärentes Empfangsverfahren bezeichnet. Da bei diesem Verfahren das Kanalgedächtnis nicht berücksichtigt wird, ist die Bitfehlerrate bei Kanälen mit Intersymbolinterferenzen sehr hoch.

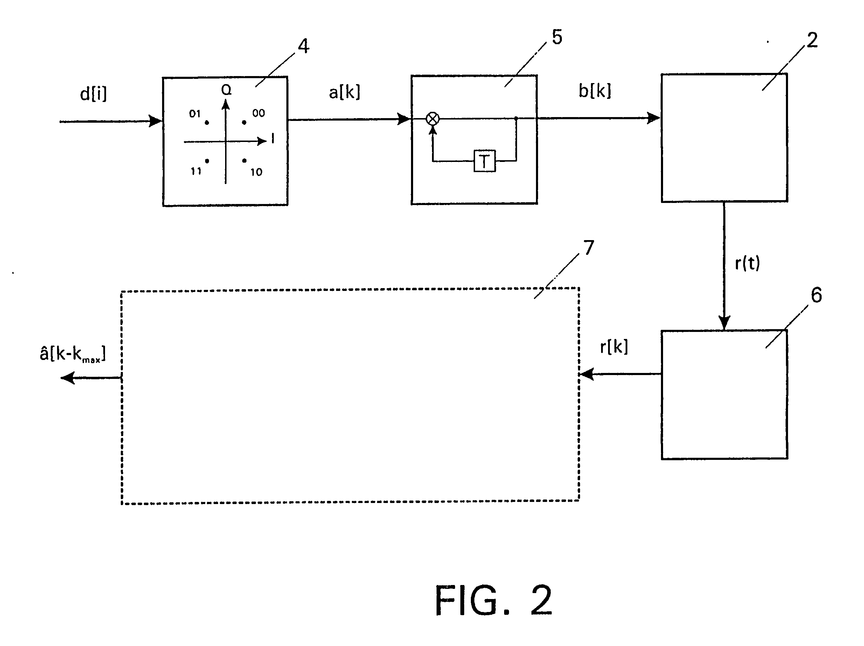

Aus dem Artikel "Nonlinear Equalization of Multipath Fading Channels with Noncoherent Demodulation", Ali Masoomzadeh und Subbarayan Pasupathy, IEEE Journal on Selected Areas in Communications, Vol. 14, No. 3, April 1996, Seite 512-520 ist ein Entzerrer für MDPSK-modulierte Signale bekannt. Dabei wird ein Empfangsverfahren für diese MDPSK Signale bei einem verzerrenden Übertragungskanal und nichtlinearen Intersymbolinterferenzen (ISI), die im Empfänger durch die Differentiation entstehen, vorgeschlagen. Zur Detektion wird in dem inkohärenten Empfänger eine entscheidungsrückgekoppelte Entzerrung (Decision-Feedback-Equalization, DFE) verwendet. Aufgrund der nichtlinearen Verzerrungen durch die Differentiation kann die konventionelle DFE nicht angewendet werden. Es ist daher notwendig, ein modifiziertes DFE-Verfahren, das auch die nichtlineare Verzerrung berücksichtigt, einzusetzen. In Figur 2 und der Beschreibung in Kapitel IV ist eine nichtlineare DFE-Entzerrung für ein MDPSK-Signal beschrieben, bei der der Entzerrer im Empfänger auf den Differentialdekoder folgt. Dieser Entzerrer kann die vom Differentialdekoder erzeugten nichtlinearen ISI entzerren. Ein solches inkohärentes Empfangsverfahren liefert bei Übertragungskanälen ohne Frequenz- und Phasenoffset deutlich schlechtere Ergebnisse als ein kohärentes Verfahren. Es kann ein Verlust von mehr als 8 dB in der Leistungseffizienz gegenüber einem optimalen kohärenten MLSE-Empfänger festgestellt werden.

In dem Aufsatz "MLSE differential phase detection for M-ary DPSK", ADACHI F, IEE PROCEEDINGS: COMMUNICATIONS, INSTITUTION OF ELECTRICAL ENGI-NEERS, GB, Bd. 141, Nr. 6, 1. Dezember 1994, Seiten 407-12, XP006001685, ISSN: 1350-2425, im folgenden auch als "Dokument D1" bezeichnet, wird ein verbessertes "Differential-Phasen-Detektions(DPD)-Schema für M-näre DPSK-Modulation (Differenzphasenumtastung) vorgestellt, welches auf einem Maximum-Likelihood-Sequence-Estimation(MLSE)-Verfahren beruht. Die übertragene Phasensequenz wird nur aus den detektierten, empfangenen Signalphasen abgeschätzt. Aus der geeigneten a-posteriori zusammengesetzten Wahrscheinlichkeitsverteilung des Ausgangsphasenrauschens von L Differentialphasendetektoren mit Ordnungen von 1 bis L Symbolen wird ein suboptimaler Entscheidungsalgorithmus abgeleitet, der als ML-DPD bezeichnet wird. Um eine verbesserte Arbeitsweise als die ML-DPD zu erreichen und zugleich die Komplexität der Rechenvorgänge zu verringern, wird eine Viterbi-dekodierende DPD (Viterbi-DPD) abgeleitet, die als Zweig-Metrik die Summe quadrierter Phasenfehler von L Differentialphasendetektoren mit Ordnungen von 1 bis L Symbolen benutzt. Die mit diesen beiden vorgestellten Detektionsschemata möglichen Verbesserungen der Arbeitsweise werden durch Rechnersimulationen für 2- und 4DPSK-Übertragungen in AWGN-Kanälen ausgewertet.

In dem Aufsatz "MULTIPLE-SYMBOL DIFFERENTIAL DETECTION OF DQPSK AND DPSK MOBILE COMMUNICATION SYSTEMS IMPAIRED BY OSCILLATOR PHASE NOISE", KIASALEH K ET AL, IEEE GLOBAL TELECOMMUNICATIONS CONFERENCE, PHOENIX, ARIZONA, NOV. 3 - 8, 1997, GLOBAL TELECOMMUNICATIONS CONFERENCE (GLOBECOM), NEW YORK, IEEE; US, Bd. 3, 3. November 1997, Seiten 1215 - 1219, XP000737723, ISBN: 0-7803-4199-6, im folgenden auch als "Dokument D2" bezeichnet, wird ein Vielfachsymbol-Differential-Detektions (MSDD)-Schema für die Detektion binärer Differenzphasenumtastungs("Differential-phase-shift-keying" = DPSK)-und DQPSK-Signale in Anwesenheit additiven weißen Gauss'schen Rauschens (AWGN) und schwachen Oszillatorphasenrauschens vorgeschlagen. Ein Algorithmus, der rechentechnisch effizienter ist als der durch das Maximum-Likelihood-Sequence-Estimation(MLSE)-Verfahren gegebene und als "CE-MSDD" bezeichnet ist, wird vorgeschlagen. Die Arbeitsweise eines entsprechenden CE-MSDD-Empfängers wird unter dem Aspekt der Symbol- oder Bitfehlerrate (BER) für verschiedene Ebenen der sog. "Full-width-at-half-maximum" (FWHM)-Linienbreite des rauschenden Oszillators beurteilt, wofür die Monte-Carlo(MC)-Simulationstechnik verwendet wird. Nach Angaben in diesem Aufsatz unterstreichen die Simulationsresultate beim Vorhandensein von Phasenrauschen klar die Überlegenheit der vorgeschlagenen Schemata über ihre 2-Symbol-Gegenstücke.

Gemäß dem Artikel "NON-REDUNDANT ERROR CORRECTION OF UNCODED M-DPSK USING A MODIFIED VITERBI ALGORITHM AND A SLIDING BLOCK NON-COHERENT MULTI-SYMBOL DETECTOR", FREEBERSYSERJ A ET AL, SERVING HUMANITY THROUGH COMMUNICATIONS. SUPERCOMM/ICC. NEW ORLE-ANS, MAY 1 - 5, 1994, INTERNATIONAL CONFERENCE ON COMMUNICATIONS (ICC), NEW YORK, IEEE, US, Bd 2, 1. Mai 1994, Seiten 950 - 955, XP000438646, im folgenden auch als "Dokument D3" bezeichnet, wird die Differenzphasenumtastung (DPSK) oft in Anwendungsfällen eingesetzt, in denen Systemanforderungen eine phasenkohärente Referenz am Empfänger schwer erreichbar oder ökonomisch unattraktiv machen. Geläufige Verfahren zur Verringerung der mit dem Verlust der Phasenkohärenz bei der DPSK einhergehenden Energieeinbuße, die eine nichtkohärente Detektion verwenden, haben sich auf nichtredundante Fehlerkorrektur (NEC) oder Sequenzabscbätzungsverfahren konzentriert sowie auf optimale nichtkohärente (Block-)Detektion, Trellis Code Modulation (TCM) und Kombinationen dieser Methoden.

Im Dokument D3 wird ein sub-optimales, nichtredundantes Fehlerkorrekturverfahren für eine nichtkohärente M-DPSK-Detektion vorgeschlagen. Dieses Verfahren entscheidet von 1 bis N DPSK-Datensymbolen unter Verwendung eines gleitenden Blocks von N+1 Phasenmessungen, ohne irgendwelche Redundanz zu dem Datensignal zu addieren, und benutzt eine vom Viterbi-Dekoder für TCM abgeleitete Methode. Simulationsergebnisse für eine additives, weißes Gauss'sches Rauschen enthaltende Umgebung zeigen, daß die beschriebene Methode trotz Beibehaltung derselben allgemeinen Struktur für unterschiedliche PSK-Signalkonstellationen vieles von der Arbeitsweise der NEC und Blockdetektion ohne exponentielle Komplexität in der Blocklänge und TCM ohne irgendeine Kodierung oder Zunahme im Raumbedarf der Signalkonstellation erreicht.

In dem Aufsatz "NON-COHERENT SEQUENCE DETECTION OF M-ARY PSK", CO-LAVOLPE G ET AL, 1997 IEEE INTERNATIONAL CONFERENCE ON COMMUNICATIONS. MONTREAL, JUNE 8 - 12, 1997, IEEE INTERNATIONAL CONFERENCE ON COMMUNICATIONS (ICC), NEW YORK, NY: IEEE, US, Bd. 1, 8. Juni 1997, Seiten 21 - 25, XP000740196, ISBN: 0-7803-3926-6, im folgenden auch als "Dokument D4" bezeichnet, wird ein nichtkohärenter Sequenzdetektionsalgorithmus für M-när phasenumgetastete (M-PSK), über mit additivem, weißem Gauss'schem Rauschen (AWGN) verrauschte Kanäle übertragene Signale vorgestellt. Es wird das Problem der optimalen Sequenzdetektion bei unbekannter Kanalphasendrehung behandelt, die stochasisch mit gleichförmiger Verteilung und über die gesamte Übertragung konstant angenommen wird. In diesem Fall hängt die Komplexität des optimalen Empfängers exponentiell von der Dauer der Übertragung ab. Weiterhin werden einige Näherungen eingeführt, um einfache, suboptimale, auf dem Viterbi-Algorithmus (VA) beruhende Detektionsmethoden zu verwirklichen, deren Arbeitsweise sich derjenigen kohärenter Detection nähert. Neben ihrer Realisierbarkeit haben die vorgeschlagenen sub-optimalen Verfahren die Eigenschaft, die Annahme konstanter Phase während der Übertragung fallenlassen zu können. Es wird angegeben, daß die vorgestellten Detektionsmethoden sich mit bis dahin bekannten, in der Literatur beschriebenen Lösungen sowohl für differentielle als auch für nichtkohärent kodierte Modulationen vorteilhaft vergleichen lassen.

Der Artikel "Reduced state transition Viterbi differential detection of M-ary DPSK signals", ADACHI F, ELECTRONICS LETTERS, IEE STEVENAGE, GB, Bd. 32, Nr. 12, 6. Juni 1996, Seiten 1064 - 1066, XP006005218, ISSN: 0013-5194, im folgenden auch als "Dokument D5" bezeichnet, beschreibt eine "Reduced-state-transition"-Viterbi-Differenzdetektion (RST-VDD), bestehend aus konventioneller Ein-Symbol-DD (1DD) und $3^{L-1}$-Zustands-VDD, die für den Empfang M-närer Differenzphasenumtastsignale (MDPSK) vorgeschlagen wird, wobei L+1 die Beobachtungsdauer in Symbollängen ist. Die vorgeschlagene RST-VDD weist gemäß der Beschreibung dieses Artikels verglichen mit der $M^{L-1}$-Zustands-VDD einen deutlich geringeren Grad an Rechenkomplexität auf. Die erreichte Bitfehlerrate (BER) einer 8DPSK in mit additivem, weißem Gauss'schem Rauschen (AWGN) verrauschten Ka nälen wird als Ergebnis einer Rechnersimulation vorgestellt.

Von allen vorstehend zitierten Druckschriften nennt einzig der Artikel "Nonlinear Equalization of Multipath Fading Channels with Noncoherent Demodulation", Ali Masoomzadeh und Subbarayan Pasupathy, IEEE Journal on Selected Areas in Communications, Vol. 14, No. 3, April 1996, Seite 512-520 ein Empfangsverfahren für MDPSK Signale bei einem verzerrenden Übertragungskanal und nichtlinearen Intersymbolinterferenzen (ISI). Alle übrigen Schriften betreffen lediglich Übertragungen über nicht verzerrende Übertragungskanäle.

Es zeigt sich, daß Lösungen, wie sie in den Dokumenten D1 bis D5 für den inkohärenten Empfang von über einen verzerrungsfreien Kanal übertragenen Signalen vorgeschlagen worden sind, bei dem die Übertragung nur durch additives weißes gaußverteiltes Rauschen (abkürzend auch als AWGN bezeichnet), nicht aber durch Intersymbolinterferenzen (abkürzend auch als ISI bezeichnet) beeinträchtigt wird, für die Überwindung der vorstehend erwähnten Nachteile bei Empfängern, die mit ISI-Kanälen arbeiten, ungeeignet sind, da sich bekanntermaßen Konstruktionskonzepte für Empfänger, die mit ISI-Kanälen arbeiten, fundamental von denjenigen unterscheiden, die mit verzerrungsfreien Kanälen arbeiten, wie in der Monographie "Digital Communications" von J.G. Proakis beschrieben ist.

Die Aufgabe der Erfindung ist es daher, die Empfangsqualifät, d.h. die Übereinstimmung der geschätzten Symbole mit den gesendeten Symbolen, bei einem inkohärenten Übertragungsverfahren und Übertragungskanälen mit Intersymbolinterferenzen zu verbessern.

Die Aufgabe wird bei einem Empfänger, einem Entzerrer und einem Mobilfunkgerät nach dem Oberbegriff des unabhängigen Anspruchs 1, 7 bzw. 8 dadurch gelöst, daß gemäß den kennzeichnenden Merkmalen der unabhängigen Ansprüche der Entzerrer zur Ermittlung der Schätzwerte â[k] für die Sequenz von gesendeten Symbolen a[k] ein inkohärentes Maximum-Likelihood-Sequence-Estimation(MLSE)-Verfahren durchführt. Die Ermittlung der Schätzwerte â[k] erfolgt beim MLSE-Verfahren mittels einer bedingten Wahrscheinlichkeitsdichtefunktion bezüglich einer Sequenz von empfangenen Symbolen r[k] bei vorausgesetzter, ungestörter Sequenz von Nutzsymbolen y[k], wobei die absolute Phase der Nutzsymbolsequenz y[k] ob der Inkohärenz nicht berücksichtigt werden muß. Die ungestörte Sequenz von Nutzsymbolen y[k] wird mittels der, bis auf die absolute Phase, als bekannt vorausgesetzten Kanalimpulsantwort h[k] für jede mögliche, aus N+1 Symbolen bestehende Sequenz von gesendeten Symbolen a[k] gebildet. Zur Bestimmung der gesendeten Sequenz von Symbolen a[k] wird die Wahrscheinlichkeit der Übereinstimmung der Sequenz von Symbolen y[k] mit der empfangenen Sequenz von Symbolen r[k] mittels der Wahrscheinlichkeitsdichtefunktion maximiert, wobei die absolute Phase von y[k] beim inkohärenten MLSE-Verfahren nicht in die Maximierung eingeht. Diese Maximierung führt zu einer Sequenz mit minimaler Fehlerwahrscheinlichkeit, die dann die Sequenz von Schätzwerten â[k] für die Sequenz von gesendeten Symbolen a[k] bildet. D.h., es wird die beim inkohärenten Übertragungsverfahren optimale Übereinstimmung der Sequenz â[k] mit der Sequenz a[k] erzielt. Da es sich bei der Wahrscheinlichkeitsdichtefunktion um eine streng monotone Exponentialfunktion handelt, kann anstelle der Maximierung eine einfachere Minimierung einer Metrik $\lambda$ durchgeführt werden. Die optimale, inkohärente Metrik $\lambda$ ermöglicht die bestmögliche Schätzung der Sequenz von gesendeten Symbolen a[k]. Der Entzerrer kann beispielsweise einen digitalen Signalprozessor oder einen anderen Prozessor enthalten, dem die empfangenen Symbole r[k] und die Gesamtimpulsantwort h[k] zugeführt werden und der die notwendigen Berechnungen zur Ermittlung der Schätzwerte â[k] für die gesendeten Symbole a[k] durchführt.

In einer vorteilhaften Ausführungsform des Empfängers teilt der Entzerrer die empfangenen Symbole r[k] in wenigstens zwei Symbolblöcke mit jeweils wenigstens zwei Symbolen auf, bildet Symbolblöcke, die sich um jeweils wenigstens ein Symbol r[k] überlappen, und bildet die Schätzwerte â[k] für die gesendeten Symbole a[k] symbolblockweise. Da die optimale Metrik $\lambda$ keine rekursive Struktur aufweist, ist die Auswertung dieser Metrik $\lambda$ sehr aufwendig. Eine aufwandsgünstige Realisierung wird durch die Bildung von Symbolblökken möglich. Dazu liest der Entzerrer die empfangenen Symbole r[k] z.B. in einen Zwischenspeicher ein und bildet die Symbolblöcke, indem er nacheinander jeweils eine definierbare Anzahl von Symbolen (einen Symbolblock) ausliest und dem Schätzverfahren zuführt. Als Zwischenspeicher kann dabei beispielsweise ein digitaler Speicher vorgesehen werden, während der digitale Signalprozessor die Steuerung übernimmt. Vorzugsweise sind Speicher und Prozessor in einem IC integriert. Die Sequenz der Empfangssymbole r[k] wird so durch die Zwischenspeicherung in $N_g$ Symbolblöcke mit einer Länge von jeweils $N_B > 1$ Symbolen aufgeteilt. Um Schätzwerte ermitteln zu können, müssen N+L-1 Symbole beobachtet werden, so daß $N_g(N_B-1)=$N+L-1 gilt. Aufeinanderfolgende Symbolblöcke überlappen sich um wenigstens ein Symbol, d.h., die letzten Symbole eines Symbolblockes werden zu Beginn des darauffolgenden Symbolblockes wiederholt. Dies ist notwendig, um für das verwendete inkohärente Empfangsverfahren eine Referenzphase für jeden Symbolblock zur Verfügung zu stellen. Durch die Aufteilung in Symbolblöcke entsteht aus der optimalen Metrik eine suboptimale Metrik (Blockmetrik), deren Minimierung einer symbolblockweisen Schätzung entspricht. Die Blockmetrik besitzt eine rekursive Struktur, wodurch eine aufwandsgünstige Realisierung möglich wird. Die Zuverlässigkeit der Schätzwerte â[k] wie auch der Implementierungsaufwand steigen mit zunehmender Symbolblocklänge an, so daß ein Kompromiß zwischen Leistungsfähigkeit und Aufwand eingestellt werden kann.

Bei einer bevorzugten Ausgestaltung der Erfindung führt der Entzerrer die symbolblockweise Schätzung der Sequenz von gesendeten Symbolen a[k] mittels eines Viterbi-Algorithmus durch. Die Realisierung der Blockmetrik mittels des bekannten Viterbi-Algorithmus ermöglicht eine aufwandsgünstige Implementierung, da die Vorteile der rekursiven Struktur ausgenutzt werden. Jeder Symbolblock der Sequenz von empfangenen Symbolen r[k] entspricht dabei einem Zeitschritt in einem dem Viterbi-Algorithmus zugeordneten Trellis-Diagramm.

Weitere bevorzugte Ausführungsformen sind in den übrigen abhängigen Ansprüchen enthalten. Insbesondere zeigt sich bei Simulationen, daß eine Aufteilung der Sequenz von empfangenen Symbolen r[k] durch den Entzerrer in Symbolblöcke mit jeweils 3 oder 2 Symbolen vorteilhaft ist. Des weiteren wird der erfindungsgemäße Empfänger besonders zweckmäßig ausgestaltet, wenn der Entzerrer Symbolblöcke bildet, die sich jeweils um genau ein Symbol r[k] überlappen.

Die Aufgabe der Erfindung wird auch noch durch den Entzerrer sowie das Mobilfunkgerät mit den erfindungsgemäßen Merkmalen gelöst.

Im folgenden soll ein Ausführungsbeispiel des erfindungsgemäßen Empfängers anhand von Zeichnungen näher erläutert werden. Es zeigen:

Figur 1: ein vereinfachtes Blockschaltbild eines Übertragungssystems,

Figur 2: ein Blockschaltbild eines Übertragungssystems für den digitalen Mobilfunk im Basisbandmodell,

Figur 3: ein Blockschaltbild für ein Symboltaktmodell des Übertragungssystem und

Figur 4: ein Blockschaltbild eines inkohärenten Empfängers mit einer Sequenz- schätzung bei einer Teilung der Sequenz von empfangenen Symbolen in Symbolblöcke.

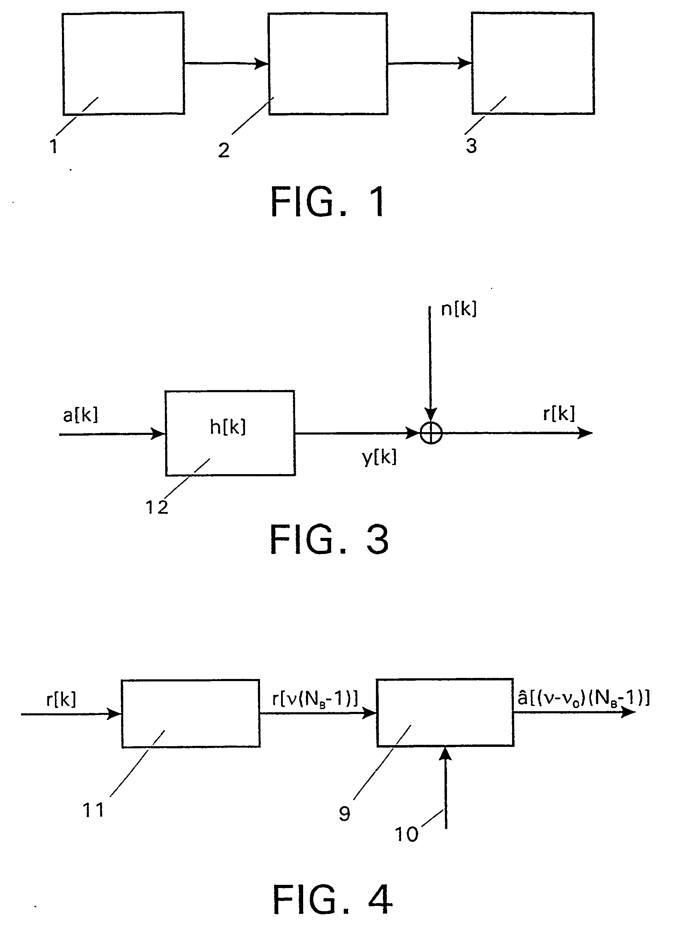

In der Figur 1 ist ein vereinfachtes Blockschaltbild eines digitalen Übertragungssystems gemäß der Erfindung dargestellt, das aus einem Sender 1, einem Übertragungskanal 2 und einem Empfänger 3 besteht. Die Figur 2 zeigt detaillierter ein Blockschaltbild eines Basisbandmodells des Übertragungssystems. Ein Mikrofon mit einem A/D-Wandler im Sender 1 des Mobilfunkgerätes erzeugt eine Folge von binären Symbolen d[i]∈ {0;1}, die mit einer QPSK-Modulation (Quarternary Phase-Shift Keying) moduliert werden. Dabei werden zwei aufeinanderfolgende Bits (00,01,10,11) in einem Mapper 4 auf ein QPSK-Symbol a[k] abgebildet. Diese Sendesymbole a[k] werden in einem Differentialkoder 5 vorkodiert, so daß Symbole b[k]=a[k]•b[k-1] entstehen. Dadurch sind die Symbole a[k] gemäß einem inkohärenten Verfahren nicht durch die absolute Phasenlage der Trägerfrequenz, sondern durch die Differenz der Phasenlage von b[k] zum vorhergehenden Symbol b[k-1] bestimmt. Bei der quaternären DPSK-Modulation ergeben sich relative Phasenunterschiede zwischen aufeinanderfolgenden Symbolen b[k] von 0˚, 90˚, 180˚ und -90˚ in Abhängigkeit von den Symbolen 00, 01, 10 und 11.

Das mittels eines Sendeimpulsformers mit einer Impulsantwort $h_s(t)$ aus den Symbolen b[k] gebildete Sendesignal wird über einen evtl. zeitvarianten Übertragungskanal 2 übertragen. Die Kanalimpulsantwort $h_c(t)$ berücksichtigt auch die Intersymbolinterferenzen (ISI). In einer Empfängereingangsstufe 6 wird das empfangene Signal r(t) gefiltert, in einem Symboltakt T abgetastet, anschließend normiert und ggf. derotiert, so daß eine Folge von empfangenen Symbolen r[k] entsteht. Die resultierende Gesamtimpulsantwort für die Übertragung aus Sendefilter $h_s(t)$, Kanal $h_c(t)$ und Empfangsfilter wird mit h(t), bzw. h[k] im Symboltaktmodell, bezeichnet. Sie kann in üblicher Weise, z. B. mittels einer bekannten Trainingssequenz, geschätzt werden, wobei allerdings ihre absolute Phase nicht bekannt sein muß. Die Folge r[k] wird einem Empfänger 7 zugeführt, der mittels der geschätzten Gesamtimpulsantwort h[k] Schätzwerte Ä[k-$k_{max}$] für die gesendeten Symbole a[k] bildet, wobei $k_{max}$ eine Verzögerung der Symbole beschreibt.

In der Figur 3 ist das Symboltaktmodell für das Übertragungssystem dargestellt, bei dem die im Übertragungssystem auftretenden Signale als Symbol zum Taktzeitpunkt k beschrieben werden. Die gesendeten Symbole a[k] werden über einen Gesamtübertragungskanal 12 mit der Gesamtimpulsantwort h[k] übertragen, so daß unverrauschte, empfangene Symbole y[k] entstehen. Diese Symbole y[k] sind jeweils von einem Rauschanteil n[k] überlagert, wobei angenommen wird, daß die Symbole n[k] unkorreliert und gemäß einer Gaußkurve verteilt sind. Die überlagerten Symbole y[k] und n[k] bilden die empfangenen Symbole r[k].

Das abgetastete Empfangssignal r[k] bei einer Übertragung mit MDPSK über einen linear verzerrenden Kanal, der Impulsinterferenzen (ISI) erzeugt, kann nach einer Filterung zur Begrenzung der Rauschbandbreite und nach einer Abtastung im Symboltakt zeitdiskret gemäß

$$r[k] = e^{j\Theta} \sum_{v=0}^{L-1} h[v] \cdot b[k-v] + n[k], \qquad\qquad (1)$$

dargestellt werden, wobei k ∈ Z die diskrete Zeit und h[k] die zeitdiskrete Impulsantwort der Länge L des gesamten Übertragungssystems bezeichnen. Alle Signale werden hier anhand ihrer äquivalenten komplexen Basisbandsignale beschrieben, wobei die nominale Trägerfrequenz als Referenzfrequenz verwendet wird. Die differentiell vorkodierten MDPSK-Symbole b[k] erhält man aus den MPSK-Symbolen a[k] mit Hilfe der Vorschrift

$$b[k]=a[k] \cdot b[k-1], \qquad\qquad (2)$$

mit a[•] ∈ {$e^{j(2\pi i/M+\lambda)}$| i = 0, .. , M-1; λ ∈ {0, π/M}}. Die Symbole a[k] werden also einem M-wertigen Symbolalphabet entnommen (z.B. M = 4, λ, = π / 4 beim Mobilfunk nach dem amerikanischen Standard IS-136). Die differentielle Vorkodierung gemäß Gl. (2) ermöglicht erst die Verwendung eines inkohärenten Empfängers. Die Rauschfolge n[k] wird als weiß und gaußverteilt angenommen. Bei Mobilfunksystemen wie IS-54, IS-136 oder PDC (japanischer Standard) weist das Empfangsfilter in der Empfängereingangsstufe eine sog. Wurzel-Nyquist-Charakteristik auf, woraus die Unkorreliertheit aufeinanderfolgender Störabtastwerte n [k] folgt. Hat das Empfangsfilter eine andere Charakteristik, so ist zusätzlich ein Whitening-Filter vorzusehen. Θ bezeichnet eine beliebige, aber konstante Phase, was bei Kanälen mit Trägerfrequenzoffset nur näherungsweise erfüllt ist. Trotzdem ist der inkohärente Empfänger sehr robust gegenüber Frequenzoffset, da sich bei ihm, im Unterschied zu kohärenten Empfängern, die vom Frequenzoffset verursachten Phasendrehungen nicht über alle Symbole aufsummieren.

Ein im Sinne des Maximum-Likelihood-Kriteriums (ML-) optimales inkohärentes Empfangsverfahren läßt sich in seiner ursprünglichen Form nicht in einfacher Weise implementieren. Eine Modifikation des optimalen Verfahrens führt auf ein Multi-Symbol-Maximum-Likelihood-Sequence-Estimation-(MSMLSE-)Verfahren, das sich mit Hilfe des bekannten Viterbi-Algorithmus aufwandsgünstig realisieren läßt.

Im folgenden wird eine im Sinne des ML-Kriteriums optimale inkohärente Metrik abgeleitet, die es erlaubt die gesendete MPSK-Folge $\langle a[k] \rangle_1^N$ mit maximaler Wahrscheinlichkeit zu ermitteln. Es sei darauf hingewiesen, daß zur MPSK-Folge $\langle a[k] \rangle_1^N$ die MDPSK-Folge $\langle b[k] \rangle_0^N$ gehört. b[0] ist dabei lediglich für die Festlegung der Referenzphase notwendig und somit nicht informationstragend. Insgesamt gibt es $M^N$ mögliche, unterschiedliche Sendefolgen $\langle a[k] \rangle_1^N$. Zur Unterscheidung der einzelnen Folgen werden sie mit dem Index $\mu (1 \leq \mu \leq M^N)$ gekennzeichnet: $\langle a_\mu[k] \rangle_1^N$ bzw. $\langle b_\mu[k] \rangle_0^N$. Zu jeder möglichen Sendefolge gehört eine entsprechende unverrauschte Empfangsfolge $\langle y_\mu[k] \rangle_0^{N+L-1}$. Die Verlängerung der Empfangsfolge von N auf N+L-1 ergibt sich, da der Kanal eine Speichertiefe von L-1 Symbolen hat. $y_\mu[k]$ erhält man aus der Beziehung:

$$y_\mu[k] = \sum_{\nu=0}^{L-1} h[\nu] \cdot b_\mu[k-\nu]. \tag{3}$$

Für die inkohärente MLSE-Schätzung muß die Folge $\langle r[k] \rangle_0^{N+L-1}$ der Empfangssymbole beobachtet werden. Wie bei MLSE-Verfahren üblich, wird vorausgesetzt, daß die Symbole $b_\mu[k]$ für k < 0 und k > N bekannt sind. Zur vereinfachten mathematischen Beschreibung des Verfahrens ist es sinnvoll folgende Definitionen einzuführen:

$$\vec{r} \equiv (r[0], r[1], \ldots, r[N+L-1])^T \tag{4}$$

$$\vec{y}_\mu \equiv (y_\mu[0], y_\mu[1], \ldots, y_\mu[N+L-1])^T \tag{5}$$

Mit diesen Definitionen und Gl. (1) läßt sich die bedingte Gauß'sche Wahrscheinlichkeitsdichtefunktion $f_{\vec{r}|\vec{y},\Theta}(\vec{r}|\vec{y}_\mu, \Theta)$ bzgl. des komplexen Empfangsvektors $\vec{r}$ bei vorausgesetztem Empfangsnutzsignalvektor $\vec{y}_\mu$ und vorausgesetzter Trägerphasendifferenz $\Theta$ angeben:

$$f_{\vec{r}|\vec{y},\Theta}(\vec{r}|\vec{y}_\mu, \Theta) = \frac{1}{(\pi \sigma_n^2)^{N+L}} \exp\left( -\frac{\left\| \vec{r} - e^{j\Theta} \cdot \vec{y}_\mu \right\|^2}{\sigma_n^2} \right). \tag{6}$$

$\sigma_n^2$ bezeichnet dabei die Varianz des Rauschens n[k]. $\|.\|^2$ bezeichnet die $L_2$-Norm des durch den Punkt repräsentierten Vektors. Die direkte Maximierung von $f_{\vec{r}|\vec{y},\Theta}(\vec{r}|\vec{y}_\mu,\Theta)$ bezüglich der Sendefolgennummer $\mu$ ist nicht möglich, da diese Funktion noch von der unbekannten Phase $\Theta$ abhängt. Bei inkohärenten Empfangsverfahren ist $\Theta$ als im Intervall ] $-\pi, \pi$] gleichverteilt anzunehmen. Somit ist es möglich die Randverteilung $f_{\vec{r}|\vec{y}}(\vec{r}|\vec{y}_\mu)$ bezüglich $\Theta$ zu bilden:

$$f_{\vec{r}|\vec{y}}(\vec{r}|\vec{y}_\mu) = \frac{1}{2\pi} \int_{-\pi}^{\pi} f_{\vec{r}|\vec{y},\Theta}(\vec{r}|\vec{y}_\mu,\theta)\, d\theta . \tag{7}$$

Daraus ergibt sich

$$f_{\vec{r}|\vec{y}}(\vec{r}|\vec{y}_\mu) = \frac{1}{(\pi \sigma_n^2)^{N+L}} \exp\left(-\frac{1}{\sigma_n^2} \sum_{k=0}^{N+L-1} \left(|r[k]|^2 + |y_\mu[k]|^2\right)\right) \cdot I_0\left(\frac{2}{\sigma_n^2} \left|\sum_{k=0}^{N+L-1} r[k]\cdot y_\mu^*[k]\right|\right). \tag{8}$$

Die Maximierung von $f_{\vec{r}|\vec{y}}(\vec{r}|\vec{y}_\mu)$ bezüglich $\mu$ ermöglicht die Schätzung der gesendeten Folge mit minimaler Fehlerwahrscheinlichkeit. Mittels einiger Umformungen läßt sich zeigen, daß die Maximierung von $f_{\vec{r}|\vec{y}}(\vec{r}|\vec{y}_\mu)$ äquivalent zur Minimierung der Metrik

$$\lambda_{N+L}^{\prime\prime\mu} = \frac{1}{\sigma_n^2} \sum_{k=0}^{N+L-1} |y_\mu[k]|^2 - \ln\left(I_0\left[\frac{2}{\sigma_n^2}\left|\sum_{k=0}^{N+L-1} r[k]\cdot y_\mu^*[k]\right|\right]\right) \tag{9}$$

ist. Die in Gl. (9) auftretende Besselfunktion nullter Ordnung erster Gattung $I_0(\bullet)$ bereitet bei der Realisierung der Metrik Probleme. Allerdings ist es möglich die Näherung $\ln(I_0(x) \approx x - 2.4$ zu verwenden. Bei Simulationen kann festgestellt werden, daß die Verwendung dieser Näherung keinen meßbaren Verlust der Leistungsfähigkeit des Verfahrens zur Folge hat. Unter Verwendung der Näherung und nach zusätzlichen Umformungen kann die Metrik gemäß Gl. (9) auf die Form

$$\lambda_{N+L}^{\mu} = \sum_{k=0}^{N+L-1} |y_\mu[k]|^2 - 2\left|\sum_{k=0}^{N+L-1} r[k]\cdot y_\mu^*[k]\right| \tag{10}$$

 gebracht werden. Diese Metrik ist eine optimale inkohärente MLSE-Metrik. Sie erlaubt die bestmögliche Schätzung der gesendeten Symbolfolge, wenn die absolute Phase der empfangenen Symbole r[k] unbekannt ist.

Da die Metrik gemäß Gl. (10) jedoch keine rekursive Struktur aufweist, ist eine effiziente Realisierung der Metrik mit Hilfe des Viterbi-Algorithmus zunächst nicht möglich. Um dennoch eine aufwandsgünstige Realisierung zu ermöglichen, kann die Metrik modifiziert werden. Eine geeignete Modifikation stellt das im folgenden beschriebene MSMLSE-Verfahren dar.

Die Ursache dafür, daß $\lambda_{N+L}^{\mu}$ nicht rekursiv darstellbar ist, ist im Term $\left|\sum_{k=0}^{N+L-1} r[k]\cdot y_\mu^*[k]\right|$ aus Gl. (10) zu finden. Um die Rekursivität zu gewährleisten, muß er modifiziert werden. Beim MSMLSE-Verfahren wird er in Blöcke (Teilbeträge) der Länge $N_B > 1$ aufgespalten. Der Term $\left| \sum\limits_{k=0}^{N+L-1} r[k] \cdot y_{\mu}^{*}[k] \right|$ wird ersetzt durch:

$$\left| r[0] \cdot y_{\mu}^{*}[0] + \ldots + r[N_B - 1] \cdot y_{\mu}^{*}[N_B - 1] \right| + \left| r[N_B - 1] \cdot y_{\mu}^{*}[N_B - 1] + \ldots + r[2(N_B - 1)] \cdot y_{\mu}^{*}[2(N_B - 1)] \right| + \ldots$$
$$+ \left| r[(N_g - 1)(N_B - 1)] \cdot y_{\mu}^{*}[(N_g - 1)(N_B - 1)] + \ldots + r[N_g(N_B - 1) \cdot y_{\mu}^{*}[N_g(N_B - 1)] \right|. \tag{11}$$

$N_g$ ist dabei die gesamte Anzahl an Blöcken. Es muß die Bedingung $N+L-1 = N_g(N_B-1)$ erfüllt sein. Dies ist in der Praxis jedoch keine Einschränkung, da $N_B$ in den meisten Fällen klein sein muß (siehe unten) und N mittels einiger an die Informationssymbole angehängter bekannter Symbole (z.B. Trainingssequenzsymbole bei Mobilfunkanwendungen) auf den gewünschten Wert gebracht werden kann. In Gl. (11) ist zu erkennen, daß sich die einzelnen Blöcke immer um ein Empfangssymbol r[k] überlappen. Diese Überlappung ist notwendig, damit die Referenzphase erhalten bleibt. Es sei darauf hingewiesen, daß beim MSMLSE-Verfahren eine Überlappung von mehr als einem Symbol möglich ist. Jedoch steigt dadurch der Implementierungsaufwand stark an. Mit Hilfe von Gl. (10) und Gl. (11) definiert man als MSMLSE-Metrik $^{MS}\lambda^{\mu}_{(N_g+1)(N_B-1)}$ :

$$^{MS}\lambda^{\mu}_{(N_g+1)(N_B-1)} \equiv \sum_{\nu=0}^{N_g-1} \sum_{k=\nu(N_B-1)}^{(\nu+1)(N_B-1)} \left| y_{\mu}[k] \right|^2 - 2 \sum_{\nu=0}^{N_g-1} \left| \sum_{k=\nu(N_B-1)}^{(\nu+1)(N_B-1)} r[k] \cdot y_{\mu}^{*}[k] \right|. \tag{12}$$

Diese Metrik läßt sich auch rekursiv darstellen:

$$^{MS}\lambda^{\mu}_{(\nu+1)(N_B-1)} = {}^{MS}\lambda^{\mu}_{\nu(N_B-1)} + \sum_{k=(\nu-1)(N_B-1)}^{\nu(N_B-1)} \left| y_{\mu}[k] \right|^2 - 2 \left| \sum_{k=(\nu-1)(N_B-1)}^{\nu(N_B-1)} r[k] \cdot y_{\mu}^{*}[k] \right|. \tag{13}$$

Die Rekursivität der MSMLSE-Metrik ermöglicht nun die Anwendung des Viterbi-Algorithmus und somit eine aufwandsgünstige Realisierung. Ein Block entspricht dabei einem Zweig im zum Viterbi-Algorithmus gehörenden Trellisdiagramm. Der Viterbi-Algorithmus benötigt beim MSMLSE-Verfahren $M^{L-1}$ Zustände. Außerdem treten pro Zeitschritt

$\dfrac{M^{L+N_B-2}}{N_B-1}$ Übergänge auf. Dies bedeutet im Vergleich zu einem kohärenten MLSE-Verfahren eine Steigerung um

einen Faktor von $\dfrac{M^{N_B-2}}{N_B-1}$. Für $N_B>2$ sind demnach mehr Übergänge notwendig als beim kohärenten Verfahren.

Allerdings kann beim MSMLSE-Verfahren aufgrund der Inkohärenz auf eine aufwendige genaue Frequenz- und Phasenregelung verzichtet werden, was es bei moderater Blocklänge (z.B. $N_B=3$) insgesamt aufwandsgünstiger macht.

Es ist festzustellen, daß die Zuverlässigkeit der MSMLSE-Detektion mit steigender Blocklänge zu nimmt. Da gleichzeitig der Implementierungsaufwand ansteigt, muß in der Praxis ein Kompromiß zwischen Leistungsfähigkeit und Aufwand eingegangen werden. Den prinzipiellen Aufbau des erfindungsgemäßen MSMLSE-Empfängers zeigt die Figur 4. In einem Zwischenspeicher 11 werden die Empfangssymbole r[k] zunächst zu einem Symbolblock (Vektor) $\vec{r}[\nu(N_B-1)]=r[(\nu-1)(N_B-1)],\ldots,r[\nu(N_B-1)]]^{T}$ zusammengefaßt. Diese Symbolblöcke werden dann mit dem oben beschriebenen MSMLSE-Verfahren im Entzerrer 9 verarbeitet. Dazu ist es erforderlich, den Vektor der zeitdiskreten Impulsantwortkoeffizienten des Übertragungssystems $\vec{h}$ = ($h$[0], $h$[1],..., $h$[L-1]$^T$ 10 zu kennen. Wegen der Inkohärenz des Verfahrens muß die Phase von $\vec{h}$ aber nicht bekannt sein. In bekannter Weise wird die Impulsantwort mit Hilfe eines geeigneten Kanalschätzverfahrens näherungsweise ermittelt und dem Entzerrer 9 zugeführt. Nach einer Verzögerung von $v_0$ Schritten gibt der MSMLSE-Entzerrer 9 dann den Vektor der Schätzwerte

$$\hat{\vec{a}}[(v-v_0)(N_B-1)] = (\hat{a}[(v-1-v_0)(N_B-1)+1],\ldots,\hat{a}[(v-v_0)(N_B-1)])^T$$ der $N_B$-1 gemeinsam entschiedenen Symbole aus. ä[k] bezeichnet dabei ein vom Empfänger geschätztes MPSK-Symbol. Die Verzögerung $v_0$ ist bei Verfahren, die den Viterbi-Algorithmus verwenden, unvermeidbar. Allerdings kann der bei einem kohärenten Empfänger gültige Faustwert $v_0 \approx 5L$ deutlich unterschritten werden, ohne daß sich eine Verschlechterung in der Leistungseffizienz einstellt. Für den bei Mobilfunkanwendungen interessanten Fall M=4, $N_B$=3 und L=2 ist z.B. schon $v_0$=2 ausreichend.

Der vorgeschlagene Empfänger bietet folgendeVorteile:

1. Bei Kanälen ohne Frequenz- und Phasenoffset führt das MSMLSE-Verfahren schon bei einer geringen Blocklänge ($N_B$=2-3) auf eine nur geringfügig schlechtere Leistungseffizienz als ein optimales kohärentes MLSE-Verfahren (Verlust von ca. 2-3 dB in der Leistungseffizienz), wobei die Leistungseffizienz durch die Verwendung von längeren Blöcken verbessert werden kann.

2. Das MSMLSE-Verfahren erzielt bei ISI-Kanälen deutlich bessere Ergebnisse als alle bekannten inkohärenten Empfangsverfahren (schon bei $N_B$=2-3 ca. 5-6 dB besser als bekannte inkohärente Verfahren).

3. Gegenüber Frequenz- und Phasenoffset ist das MSMLSE-Verfahren wesentlich robuster als alle bekannten kohärenten Empfangsverfahren. Auf eine aufwendige Frequenz- und Phasenregelung kann somit verzichtet werden.

### Patentansprüche

1. Empfänger (7) für ein digitales Übertragungssystem mit einem inkohärenten Übertragungsverfahren, der einen Entzerrer (9) zur Bildung von Schätzwerten â[k] für eine Sequenz von über einen verzerrenden Übertragungskanal (2) gesendeten Symbolen a[k] aus empfangenen Symbolen r[k] mittels einer die Übertragungseigenschaften beschreibenden Impulsantwort h[k] enthält,
**dadurch gekennzeichnet,**
**daß** der Entzerrer (9) zur Ermittlung der Schätzwerte â[k] für die Sequenz von gesendeten Symbolen a[k] zum Durchführen eines inkohärenten Maximum-Likelihood-Sequence-Estimation(MLSE)-Verfahrens gemäß einer durch die Gleichung

$$^{MS}\lambda^\mu_{(v+1)(N_B-1)} = {}^{MS}\lambda^\mu_{v(N_B-1)} + \sum_{k=(v-1)(N_B-1)}^{v(N_B-1)} \left|y_\mu[k]\right|^2 - 2\left|\sum_{k=(v-1)(N_B-1)}^{v(N_B-1)} r[k]\cdot y^*_\mu[k]\right|$$

bestimmten Metrik ausgestaltet ist, worin weiterhin

- $^{MS}\lambda^\mu_{(v+1)(N_B-1)}$ eine Multi-Symbol-Maximum-Likelihood-Sequence-Estimation-(MSMLSE-)-Metrik darstellt,
- $N_B$ die Länge von Symbolblöcken ist, in die die empfangenen Symbole r[k] zum Zwischenspeichern aufgeteilt werden,
- $y_\mu$[k] Hypothesen für das verzerrte störungsfreie Signal am Ausgang des Übertragungskanals (2) darstellen,
- $v$ ein Laufindex in einer Summendarstellung der empfangenen Symbole r[k] und
- k die diskrete Zeit ist.

2. Empfänger (7) nach Anspruch 1,
**dadurch gekennzeichnet,**
**daß** der Entzerrer (9) derart ausgestaltet ist, daß er die empfangenen Symbole r[k] in wenigstens zwei Symbolblöcke mit jeweils wenigstens zwei Symbolen aufteilt,

**daß** der Entzerrer (9) derart ausgestaltet ist, daß er Symbolblöcke bildet, die sich um jeweils wenigstens ein Symbol r[k] überlappen und

**daß** der Entzerrer (9) derart ausgestaltet ist, daß er die Schätzwerte â[k] für die gesendeten Symbole a[k] symbolblockweise bildet.

3. Empfänger (7) nach Anspruch 2,
   **dadurch gekennzeichnet,**
   **daß** der Entzerrer (9) derart ausgestaltet ist, daß er die symbolblockweise Schätzung der Sequenz von gesendeten Symbolen a[k] mittels eines Viterbi-Algorithmus durchführt.

4. Empfänger (7) nach Anspruch 2,
   **dadurch gekennzeichnet,**
   **daß** der Entzerrer (9) derart ausgestaltet ist, daß er die Sequenz von empfangenen Symbolen r[k] in Symbolblöcke mit jeweils 3 Symbolen aufteilt.

5. Empfänger (7) nach Anspruch 2,
   **dadurch gekennzeichnet,**
   **daß** der Entzerrer (9) derart ausgestaltet ist, daß er die Sequenz von empfangenen Symbolen r[k] in Symbolblöcke mit jeweils 2 Symbolen aufteilt.

6. Empfänger (7) nach Anspruch 2,
   **dadurch gekennzeichnet,**
   **daß** der Entzerrer (9) derart ausgestaltet ist, daß er Symbolblöcke bildet, die sich jeweils um genau ein Symbol r [k] überlappen.

7. Entzerrer (9) für ein digitales Übertragungssystem mit einem inkohärenten Übertragungsverfahren zur Bildung von Schätzwerten â[k] für eine Sequenz von über einen verzerrenden Übertragungskanal (2) gesendeten Symbolen a[k] aus empfangenen Symbolen r[k] mittels einer die Übertragungseigenschaften beschreibenden Impulsantwort h[k],
   **dadurch gekennzeichnet,**
   **daß** der Entzerrer (9) zur Ermittlung der Schätzwerte â[k] für die Sequenz von gesendeten Symbolen a[k] zum Durchführen eines inkohärenten Maximum-Likelihood-Sequence-Estimation(MLSE)-Verfahrens gemäß einer durch die Gleichung

$$^{MS}\lambda^{\mu}_{(\nu+1)(N_B-1)} = \, ^{MS}\lambda^{\mu}_{\nu(N_B-1)} + \sum_{k=(\nu-1)(N_B-1)}^{\nu(N_B-1)} \left|y_{\mu}[k]\right|^2 - 2\left|\sum_{k=(\nu-1)(N_B-1)}^{\nu(N_B-1)} r[k] \cdot y^{*}_{\mu}[k]\right|$$

bestimmten Metrik ausgestaltet ist, worin weiterhin

- $^{MS}\lambda^{\mu}_{(\nu+1)(N_B-1)}$ eine Multi-Symbol-Maximum-Likelihood-Sequence-Estimation-(MSMLSE-)-Metrik darstellt,
- $N_B$ die Länge von Symbolblöcken ist, in die die empfangenen Symbole r[k] zum Zwischenspeichern aufgeteilt werden,
- $y_{\mu}[k]$ Hypothesen für das verzerrte störungsfreie Signal am Ausgang des Übertragungskanals (2) darstellen,
- $\nu$ ein Laufindex in einer Summendarstellung der empfangenen Symbole r[k] und
- k die diskrete Zeit ist.

8. Mobilfunkgerät für ein digitales Übertragungssystem mit einem inkohärenten Übertragungsverfahren, das einen Entzerrer (9) zur Bildung von Schätzwerten â[k] für eine Sequenz von über einen verzerrenden Übertragungskanal (2) gesendeten Symbolen a[k] aus empfangenen Symbolen r[k] mittels einer die Übertragungseigenschaften beschreibenden Impulsantwort h[k] enthält,
   **dadurch gekennzeichnet,**
   **daß** der Entzerrer (9) zur Ermittlung der Schätzwerte â[k] für die Sequenz von gesendeten Symbolen a[k] zum Durchführen eines inlcohärenten Maximum-Likelihood-Sequence-Estimation(MLSE)-Verfahrens gemäß einer

durch die Gleichung

$$ {}^{MS}\lambda^{\mu}_{(\nu+1)(N_B-1)} = {}^{MS}\lambda^{\mu}_{\nu(N_B-1)} + \sum_{k=(\nu-1)(N_B-1)}^{\nu(N_B-1)} \left|y_\mu[k]\right|^2 - 2\left|\sum_{k=(\nu-1)(N_B-1)}^{\nu(N_B-1)} r[k]\cdot y^*_\mu[k]\right| $$

bestimmten Metrik ausgestaltet ist, worin weiterhin

- ${}^{MS}\lambda^{\mu}_{(\nu+1)(N_B-1)}$ eine Multi-Symbol-Maximum-Likelihood-Sequence-Estimation-(MSNILSE-)-Metrik darstellt,
- $N_B$ die Länge von Symbolblöcken ist, in die die empfangenen Symbole r[k] zum Zwischenspeichern aufgeteilt werden,
- $y_\mu$[k] Hypothesen für das verzerrte störungsfreie Signal am Ausgang des Übertragungskanals (2) darstellen,
- $\nu$ ein Laufindex in einer Summendarstellung der empfangenen Symbole r[k] und
- k die diskrete Zeit ist.

## Claims

1. Receive (7) for a digital transmission system, which comprises an incoherent transmission, method, including an equalizer (9) for forming estimators â[k] for a séquence of symbols a[k] transmitted over a distorting transmission, channel (2) from received symbols r[k] by means of an impulse response h[k] that describes the transmission characteristics,
   **characterized in**
   **that** the equalizer (9) is arranged for détermination of the estimators â[k] for the sequence of transmitter symbols a[k] for performing an incoherent maximun-likelihood-sequence-estimation(MLSE)-method in accordance with a metrics that is defined by the equation

$$ {}^{MS}\lambda^{\mu}_{(\nu+1)(N_B-1)} = {}^{MS}\lambda^{\mu}_{\nu(N_B-1)} + \sum_{k=(\nu-1)(N_B-1)}^{\nu(N_B-1)} \left|y_\mu[k]\right|^2 - 2\left|\sum_{k=(\nu-1)(N_B-1)}^{\nu(N_B-1)} r[k]\cdot y^*_\mu[k]\right| $$

   wherein further

   - ${}^{MS}\lambda^{\mu}_{(\nu+1)(N_B-1)}$

   is a multi-symbol-maximum-likelihood-sequence-estimation-(MSMLSE)-metrics,
   - $N_B$ is the length of symbol blocks, in which the received symbols r[k] are divided for suffering,
   - $y_\mu$[k] represent hypotheses for the disported error free Signal at the output of the transmission channel (2),
   - $\nu$ is a formula index in a sum representation of the received symbols r[k], and
   - k is a discrete point of time.

2. Receiver (7) in accordance with claim 1,
   **characterized in**
   **that** the equalizer (9) is arranged such that, it divides the received symbols r[k] in at least two symbol blocks each comprising at least two symbols,
   **that** the equalizer (9) is arranged such that, it forms symbol blocks, which overlap each other by at least one Symbol r[k], and
   **that** the equalizer (9) is arranged such that, it forms the estimators â[k] for the transmitted symbols a[k] in a symbol block by Symbol block manner.

3. Receiver (7) in accordance with claim 2,
   **characterized in**
   **that** the equalizer (9) is arranged such that, it perform the estimation of the sequence of transmitted symbols a[k] in a symbol block by symbol block manner by means of a Viterbi-algorithm.

4.  Receiver (7) in accordance with claim 2,
    **characterized in**
    **that** the equalizer (9) is arranged such that, it divides the séquence of received symbols r[k] in symbol blocks each comprising 3 symbols.

5.  Deceiver (7) in accordance with claim 2,
    **characterized in**
    **that** the equalizer (9) is arranged such that, it divides the received symbols r[k] in Symbol blocks each comprising 2 symbols.

6.  Receiver (7) in accordance with claim 2,
    **characterized in**
    **that** the equalizer (9) is arranged such that, it forms symbol blocks, which overlap each other by exactly one symbol r[k].

7.  Equalizer (9) for a digital transmission system, which comprises an incoherent transmission method, for forming estimators â[k] for a sequence of symbols a[k] transmitted over a disporting transmission channel (2) of received symbols r[k] by means of an impulse response h[k] that describes the transmission characteristics,
    **characterized in**
    **that** the equalizer (9) is arranged for détermination of the estimators â[k] for the séquence of transmitter symbols a[k] for performing an incoherent maximum-likelihood-sequence-estimation(MLSE)-method in accordance with a metrics that is defined by the equation

$$^{MS}\lambda^{\mu}_{(v+1)(N_B-1)} \quad ^{S}\lambda^{\mu}_{v(N_B-1)} + \sum_{k=(v-1)(N_B-1)}^{v(N_B-1)} \left|y_{\mu}[k]\right|^2 - 2\left|\sum_{k=(v-1)(N_B-1)}^{v(N_B-1)} r[k]\cdot y^{*}_{\mu}[k]\right|$$

wherein further

-   $^{MS}\lambda^{\mu}_{(v+1)(N_B-1)}$ is a multi-symbol-maximum-likelihood-sequence-estimation-(MSMLSE)-metrics,

    - $N_B$ is the length of Symbol blocks, in which the received symbols r[k] are divided for buffering,
    - $y_{\mu}[k]$ represent hypotheses for the distorted error free Signal at the output or the transmission, channel (2),
    - v is a formula index in a sum representation of the received symbols r[k], and
    - k is a discrete point or time.

8.  Mobile radio devise for a digital transmission system, which comprises an incoherent transmission method, including an equalizer (9) for forming estimators â[k] for a séquence of symbols a[k] transmitted over a disporting transmission, channel (2) from received symbols r[k] by means of an impulse response h[k], which defines the transmission characteristics,
    **characterized in**
    **that** the equalizer (9) is arranged for détermination of the estimators â[k] for the séquence of transmitted symbols a[k] for performing an incoherent maximum-likelihood-sequence-estimation(MLSE)-method in accordance with a metrics that is defined by the equation

$$^{MS}\lambda^{\mu}_{(v+1)(N_B-1)} = {}^{MS}\lambda^{\mu}_{v(N_B-1)} + \sum_{k=(v-1)(N_B-1)}^{v(N_B-1)} \left|y_{\mu}[k]\right|^2 - 2\left|\sum_{k=(v-1)(N_B-1)}^{v(N_B-1)} r[k]\cdot y^{*}_{\mu}[k]\right|$$

wherein further

-   $^{MS}\lambda^{\mu}_{(v+1)(N_B-1)}$ is a multi-symbol-maximum-likelihood-sequence-estimation-(MSMLSE)-metrics,

    - $N_B$ is the length of symbol blocks, in which the received symbols r[k] are divided for buffering,

- $y_\mu[k]$ represent hypotheses for the disported error free signal at the output of the transmission channel (2),
- v is a formula index in a sum representation of the received symbols r[k], and
- k is a discrete point of time.

## Revendications

1. Récepteur (7) pour un système de transmission numérique qui comprend un procédé de transmission non cohérent, comprenant und égaliseur (9) pour former des estimateurs â[k] pour une séquence de symboles a[k] transmise sur un canal de transmission avec distorsion (2) à partir de symboles reçus r[k] au moyen d'une réponse impulsionnelle h[k] qui décrit les caractéristiques de transmission,
**caractérisé en ce que**
l'égaliseur (9) est agencé pour la détermination des estimateurs â[k] pour la séquence de symboles transmis a[k] pour réaliser und procédé d'estimation de séquence à vraisemblance maximum (MLSE) non cohérent conformément à une métrique qui est définie par l'équation

$$MS\lambda^\mu_{(v+1)(N_B-1)} = MS\lambda^\mu_{v(N_B-1)} + \sum_{k=(v-1)(N_B-1)}^{v(N_B-1)} \left|y_\mu[k]\right|^2 - 2\left|\sum_{k=(v-1)(N_B-1)}^{v(N_B-1)} r[k] \cdot y_\mu^*[k]\right|$$

dans laquelle :

- $MS\lambda^\mu_{(v+1)(N_B-1)}$ est une métrique d'estimation de séquence à vraisemblance maximum (MSMLSE) multi-symbole,
- $N_B$ est la longueur des blocs de symboles dans lesquels les symboles reçus r[k] sont séparés pour être mis en tampon,
- $y_\mu[k]$ représente des hypothèses pour le signal exempt d'erreur distordu au niveau de la sortie du canal de transmission (2),
- v est un indice courant dans une représentation de somme des symboles reçus r[k], et
- k est un point discret dans le temps.

2. Récepteur (7) selon la revendication 1,
**caractérisé en ce que** :

l'égaliseur (9) est agencé de telle sorte qu'il sépare les symboles reçus r[k] en au moins deux blocs de symboles comprenant chacun au moins deux symboles,
l'égaliseur (9) est agencé de telle sorte qu'il forme des blocs de symboles qui se chevauchent entre eux sur au moins un symbole r[k], et
l'égaliseur (9) est agencé de telle sorte qu'il forme les estimateurs â[k] pour les symboles transmis a[k] dans un bloc de symboles bloc par bloc.

3. Récepteur (7) selon la revendication 2,
**caractérisé en ce que**
l'égaliseur (9) est agencé de telle sorte qu'il réalise l'estimation de la séquence de symboles transmis a[k] dans un bloc de symboles bloc par bloc au moyen d'un algorithme de Viterbi.

4. Récepteur (7) selon la revendication 2,
**caractérisé en ce que**
l'égaliseur (9) est agencé de telle sorte qu'il sépare la séquence de symboles reçus r[k] en blocs de symboles comprenant chacun 3 symboles.

5. Récepteur (7) selon la revendication 2,
**caractérisé en ce que**
l'égaliseur (9) est agencé de telle sorte qu'il sépare les symboles reçus r[k] en blocs de symboles comprenant chacun 2 symboles.

6. Récepteur (7) selon la revendication 2,
   **caractérisé en ce que**
   l'égaliseur (9) est agencé de telle sorte qu'il forme des blocs de symboles qui se chevauchent entre eux sur exactement un symbole r[k].

7. Egaliseur (9) pour un système de transmission numérique qui comprend une procédé de transmission non cohérent, pour former des estimateurs â[k] pour une séquence de symboles a[k] transmise sur un canal de transmission avec distorsion (2) à partir de symboles reçus r[k] au moyen d'une réponse impulsionnelle h[k] qui décrit les caractéristiques de transmission,
   **caractérisé en ce que**
   l'égaliseur (9) est agencé pour la détermination des estimateurs â[k] pour la séquence de symboles transmis a[k] pour réaliser une procédé d'estimation de séquence à vraisemblance maximum (MLSE) non cohérent conformément à une métrique qui est définie par l'équation

$$MS\lambda^{\mu}_{(v+1)(N_B-1)} = MS\lambda^{\mu}_{v(N_B-1)} + \sum_{k=(v-1)(N_B-1)}^{v(N_B-1)} \left|y_{\mu}[k]\right|^2 - 2\left|\sum_{k=(v-1)(N_B-1)}^{v(N_B-1)} r[k]\cdot y^*_{\mu}[k]\right|$$

dans laquelle :

- $MS\lambda^{\mu}_{(v+1)(N_B-1)}$ est une métrique d'estimation de séquence à vraisemblance maximum (MSMLSE) multi-symbole,
- $N_B$ est la longueur des blocs de symboles dans lesquels les symboles reçus r[k] sont séparés pour être mis en tampon,
- $y_{\mu}[k]$ représente des hypothèses pour le signal exempt d'erreur distordu au niveau de la sortie du canal de transmission (2),
- v est un indice courant dans une représentation de somme des symboles reçus r[k], et
- k est une point discret dans le temps.

8. Dispositif radio mobile pour un système de transmission numérique qui comprend un procédé de transmission non cohérent, comprenant un égaliseur (9) pour former des estimateurs â[k] pour une séquence de symboles a[k] transmise sur un canal de transmission avec distorsion (2) à partir de symboles reçus r[k] au moyen d'une réponse impulsionnelle h[k] qui définit les caractéristiques de transmission,
   **caractérisé en ce que**
   l'égaliseur (9) est agencé pour la détermination des estimateurs â[k] pour la séquence de symboles transmis a[k] pour réaliser un procédé d'estimation de séquence à vraisemblance maximum (MLSE) non cohérent conformément à une métrique qui est définie par l'équation

$$MS\lambda^{\mu}_{(v+1)(N_B-1)} = MS\lambda^{\mu}_{v(N_B-1)} + \sum_{k=(v-1)(N_B-1)}^{v(N_B-1)} \left|y_{\mu}[k]\right|^2 - 2\left|\sum_{k=(v-1)(N_B-1)}^{v(N_B-1)} r[k]\cdot y^*_{\mu}[k]\right|$$

dans laquelle :

- $MS\lambda^{\mu}_{(v+1)(N_B-1)}$ est une métrique d'estimation de séquence à vraisemblance maximum (MSMLSE) multi-symbole,
- $N_B$ est la longueur des blocs de symboles dans lesquels les symboles reçus r[k] sont séparés pour être mis en tampon,
- $y_{\mu}[k]$ représente des hypothèses pour le signal exempt d'erreur distordu au niveau de la sortie du cantal de transmission (2),
- v est un indice courant dans une représentation de somme des symboles reçus r[k], et
- k est un point discret dans le temps.

FIG. 1

FIG. 3

FIG. 4

16

FIG. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **John G. Proakis.** Digital Communications. Mc-Graw-Hill International Editions, 1995
- **Ali Masoomzadeh ; Subbarayan Pasupathy.** Nonlinear Equalization of Multipath Fading Channels with Noncoherent Demodulation. *IEEE Journal on Selected Areas in Communications,* April 1996, vol. 14 (3), 512-520
- **ADACHI F.** MLSE differential phase detection for M-ary DPSK. *IEE PROCEEDINGS: COMMUNICATIONS, INSTITUTION OF ELECTRICAL ENGI-NEERS,* 01. Dezember 1994, vol. 141 (6), ISSN 1350-2425, 407-12
- **KIASALEH K et al.** MULTIPLE-SYMBOL DIFFERENTIAL DETECTION OF DQPSK AND DPSK MOBILE COMMUNICATION SYSTEMS IMPAIRED BY OSCILLATOR PHASE NOISE. *IEEE GLOBAL TELECOMMUNICATIONS CONFERENCE,* 03. November 1997, vol. 3, ISBN 0-7803-4199-6, 1215-1219

- **FREEBERSYSERJ A et al.** NON-REDUNDANT ERROR CORRECTION OF UNCODED M-DPSK USING A MODIFIED VITERBI ALGORITHM AND A SLIDING BLOCK NON-COHERENT MULTI-SYMBOL DETECTOR. *SERVING HUMANITY THROUGH COMMUNICATIONS. SUPERCOMM/ICC. NEW ORLE-ANS,* 01. Mai 1994, vol. 2, 950-955
- **CO-LAVOLPE G et al.** NON-COHERENT SEQUENCE DETECTION OF M-ARY PSK. *1997 IEEE INTERNATIONAL CONFERENCE ON COMMUNICATIONS,* 08. Juni 1997, vol. 1, ISBN 0-7803-3926-6, 21-25
- **ADACHI F.** Reduced state transition Viterbi differential detection of M-ary DPSK signals. *ELECTRONICS LETTERS,* 06. Juni 1996, vol. 32 (12), ISSN 0013-5194, 1064-1066